# EUROPEAN PATENT SPECIFICATION

(11) **EP 1 464 053 B1**
(45) Date of publication and mention of the grant of the patent: **10.03.2010**
(21) Application number: 02793578.2
(22) Date of filing: 30.12.2002
(51) Int. Cl.: G11B 23/03

(54) **DISK CARTRIDGE**
PLATTENKASSETTE
CARTOUCHE A DISQUE

(30) Priority: 10.01.2002 KR 2002001430
(43) Date of publication of application: 06.10.2004
(73) Proprietor: SAMSUNG ELECTRONICS CO., LTD., Suwon-si, Gyeonggi-do 442-742 (KR)
(72) Inventor: Yim, Hong-Kyun, 519-304 Jugong 5-danji Apt., Suwon-si, Gyeonggi-do 442-370 (KR); Lee, Yong-Hoon, 702-1401 Salgugol 7-danji, Suwon-si, Gyeonngi-do 442-470 (KR); Eum, Jae-Yong, 915-601 Jugong Apt., Suwon-si, Gyeonggi-do 442-470 (KR); Choi, Han-Kook, 202-1501 Jugong Greenvill Apt., Suwon-si, Gyeonggi-do 442-370 (KR)
(74) Representative: Kohler, Janet Wendy
(86) International application number: PCT/KR2002/002502
(87) International publication number: WO 2003/065372

(56) References cited:
- WO-A-02/056313
- JP-U- 61 006 974
- KR-B1- 94 005 563
- US-A- 4 692 831
- US-A- 4 814 926
- US-A- 5 278 717
- PATENT ABSTRACTS OF JAPAN vol. 016, no. 268 (P-1372), 17 June 1992 (1992-06-17) & JP 04 067486 A (TOSHIBA CORP), 3 March 1992 (1992-03-03)

## Description

### Technical Field

The present invention relates to a disk cartridge for accommodating an information recording/reproduction medium (a disk) so that a recording surface of the disk can be protected from contaminants such as dust or finger prints.

### Background Art

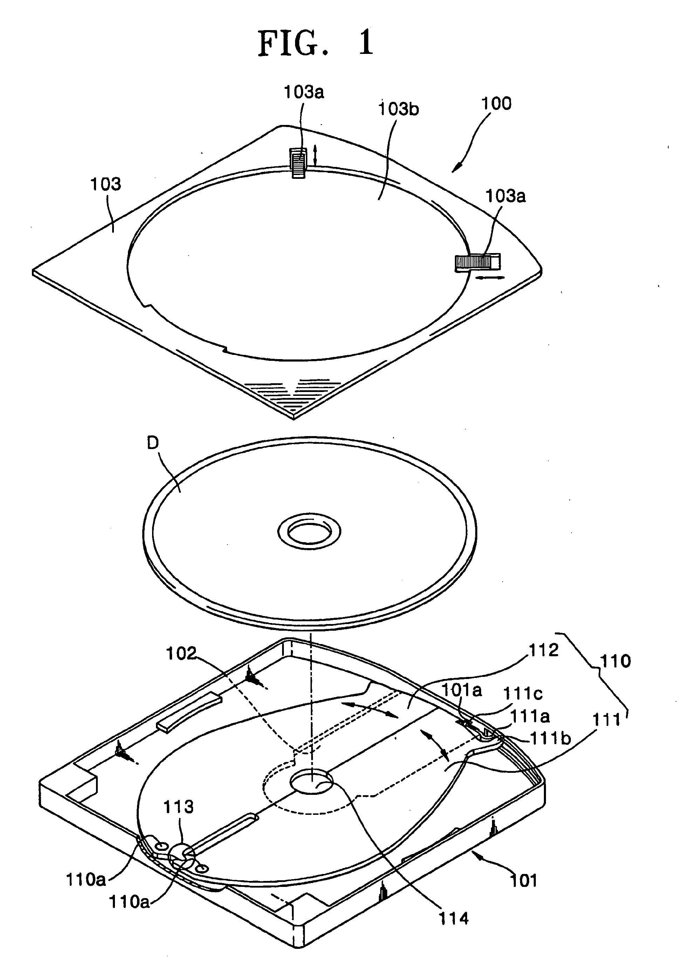

In general, a disk cartridge accommodating a disk, that is, an information recording/reproducing medium, is loaded in a disk drive apparatus. As shown in FIG. 1, a conventional disk cartridge includes a case 101 for accommodating a disk D, a shutter 110 installed in the case 101 to be capable of rotating for selectively opening/shutting an opening hole 102 formed in the case 101, so that a pickup (not shown) of the disk drive apparatus can access the disk D, and a cover 103 coupled to the upper portion of the case 101. Reference numeral 103b denotes an open hole formed in the cover 103 to change the disk D. Reference numeral 103a denotes an escape prevention lever installed on the cover 103 to be capable of sliding so that the disk D does not escape through the open hole 103b. Thus, when the disk D is installed, the escape prevention lever 103a is moved back not to interfere with the disk D. When the installation of the disk D is completed, the escape prevention lever 103a is moved forward, as shown in the drawing, so that the disk D is prevented by a leading end portion of the escape prevention lever 103a from escaping through the open hole 103b.

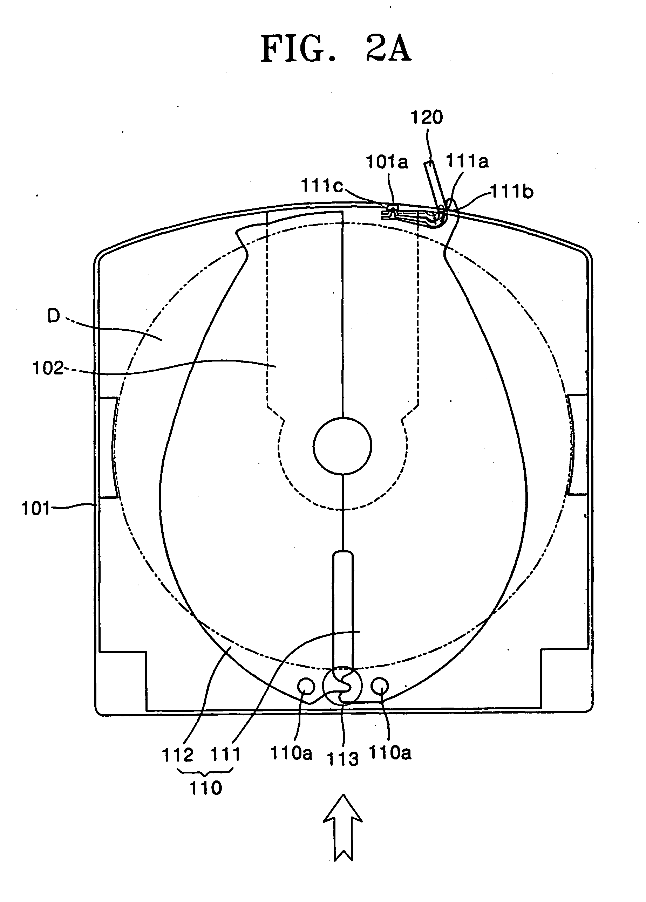

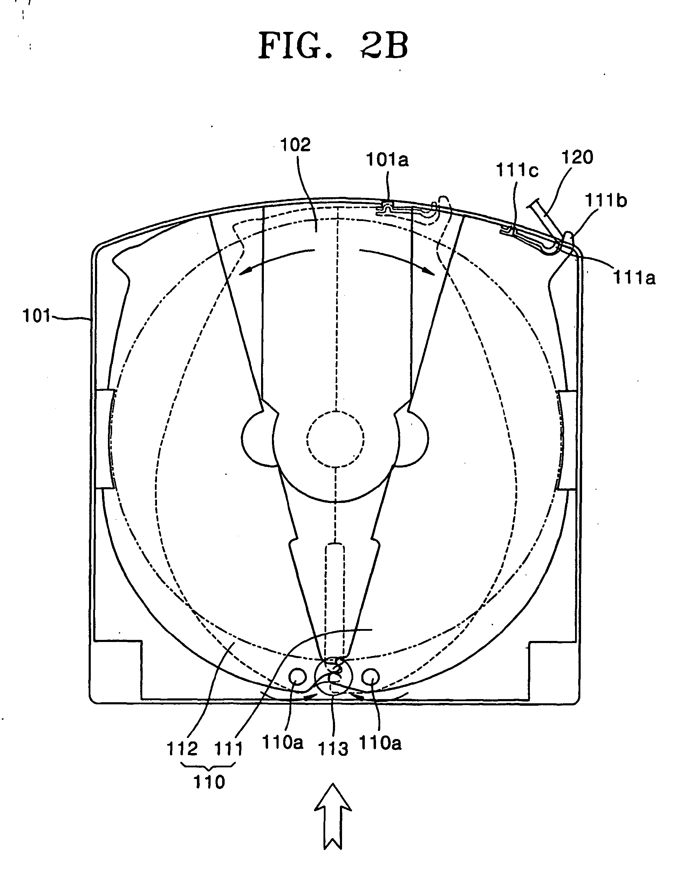

When the disk cartridge 100 in which the disk D is accommodated is inserted in the disk drive apparatus, as shown in FIG. 2A, an opening lever 120 installed at the disk drive apparatus pushes a locking piece 111 a to release locking between a protrusion 111c of the shutter 110 and a groove 101 a of the case 101. Next, as shown in FIG. 2B, the opening lever 120 pushes and rotates an interference piece 111 b. The shutter 110 includes first and second shutter portions 111 and 112 which are respectively installed to be capable of rotating around left and right rotation shafts 110a and engaged with each other via an engagement threaded portion 113. When the first shutter portion 111, integrally connected to the interference piece 111b, rotates clockwise, the second shutter portion 112 rotates counterclockwise. Accordingly, the first and second shutter portions 111 and 112 are separated from each other and then the opening hole 102 is opened. Thus, a pickup (not shown) of the disk drive apparatus can access a recording surface of the disk D through the open hole 102 that is opened, so that information recording and/or reproduction can be performed. Although not shown in the drawing, a torsion spring for elastically biasing the first shutter portion 111 counterclockwise, that is, in a direction in which the opening hole 102 is shut is, installed on the rotation shaft 110a between the first shutter portion 111 and the bottom surface of the case 101. Thus, when a force applied to the opening lever 120 is removed, the shutter 110 is returned to the original shut state.

However, in the above structure, since the shutter 110 is installed in the case 101 and the disk D is placed on the shutter 110, during opening/shutting operation of the shutter 110, a surface contact between the recording surface of the disk (the lower surface of the disk in the drawing) and the shutter 110 is generated so that the recording surface of the disk may be damaged.

Also, dust can enter through the open hole 103b of the cover 103. Of course, since the upper surface of the disk D facing the open hole 103b is not a recording surface, direct contamination by dust is not generated. However, when dust intrudes through a gap between the disk D and the cover 103 and remains on the shutter 110, the dust on the shutter 110 can adhere to the recording surface of the disk indirectly during the opening/shutting operation.

Therefore, there is a need to protect the recording surface of the disk during the opening/shutting operation of the shutter 110.

US-A-5,278,717 discloses a disk cartridge provided with a shutter movably installed on the case and disposed under the disk to open/shut the pickup insertion holes formed on the case. This document provides basis for the pre-characterising portion of independent claim 1 appended hereto.

### Disclosure of the Invention

To solve the above and other problems, the present invention provides a disk cartridge which can protect a recording surface of a disk from being damaged by a contamination source during the opening/shutting operation of a shutter installed in a case.

According to the present invention there is provided an apparatus and method as set forth in the appended claims. Preferred features of the invention will be apparent from the dependent claims, and the description which follows.

According to an aspect of the present invention, there is provided a disk cartridge including a case accommodating a disk and having a first hole, a cover installed at the case and having a second hole open to an outside of the cover, and a shutter movably installed on the case and disposed under the disk to open/shut the first hole formed in the case; **characterised in that** the disk cartridge comprises: a plurality of protruding portions provided at the shutter to support a non information area provided at an outer circumferential side of the disk and having inclined surfaces inclined at a predetermined angle, so that, when the shutter is opened, the disk descends along the inclined surfaces and, when the shutter is shut, the disk ascends along the inclined surfaces to closely contact a portion around the second hole of the cover.

### Brief Description of the Drawings

FIG. 1 is a perspective view illustrating a conventional disk cartridge;
FIGS. 2A and 2B are plan views illustrating a state in which the shutter of the disk cartridge shown in FIG. 1 is opened/shut;
FIG. 3 is an exploded perspective view illustrating a disk cartridge according to the present invention;
FIG. 4 is a perspective view illustrating the assembled state of the disk cartridge of FIG. 3;
FIG. 5 is a plan view showing the state in which the shutter of the disk cartridge shown in FIG. 3 is shut;
FIG. 6 is a sectional view taken along line VI-VI of FIG. 5;
FIG. 7 is a plan view illustrating the state in which the shutter of the disc cartridge shown in FIG. 3 is opened;
FIG. 8 is a view showing the state in which the disk moved up and down along the shutter opening/shutting operation of the disk cartridge shown in FIG. 3;
FIG. 9 is a view illustrating another example of the cover shown in FIG. 3; and
FIG.10 is a view illustrating yet another example of the shutter shown in FIG. 3.

### Best mode for carrying out the Invention

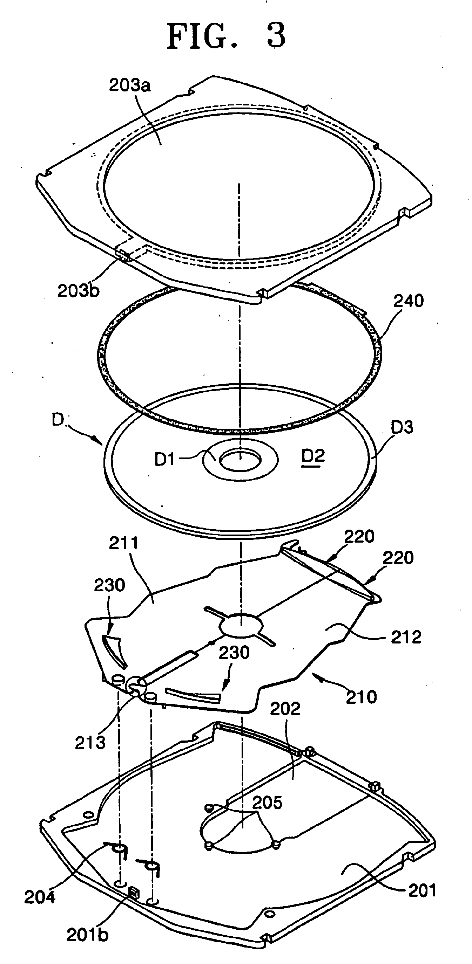

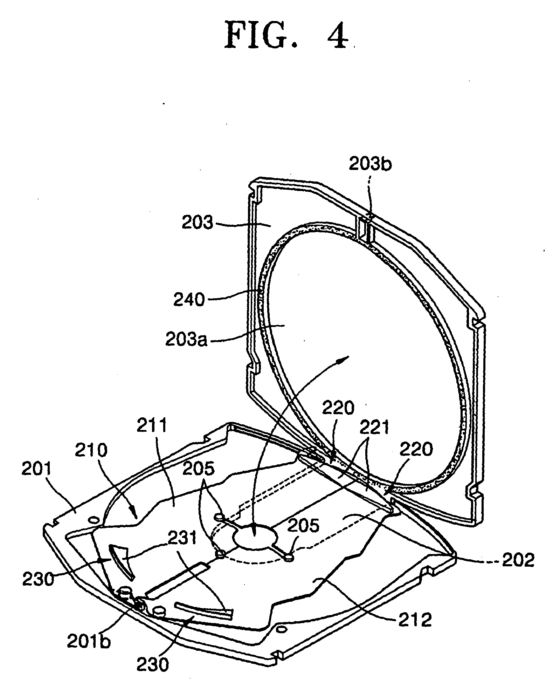

FIGS. 3 and 4 show the disassembled and assembled states of a disk cartridge according to the present invention.

Referring to the drawings, a disk cartridge includes a case 201 for accommodating a disk D, a shutter 210 for opening/shutting an opening hole 202 formed in the case 201 under the disk D, and a cover 203 covering an upper surface of the case 201. Reference numeral 240 denotes a non woven fabric, which is a sealing member, attached around an open hole 203a of the cover 203.

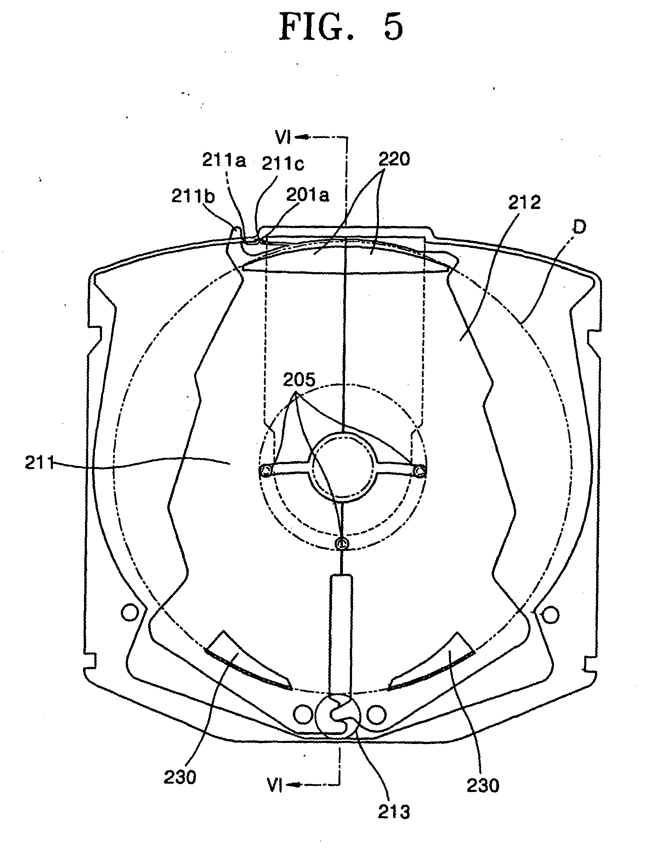

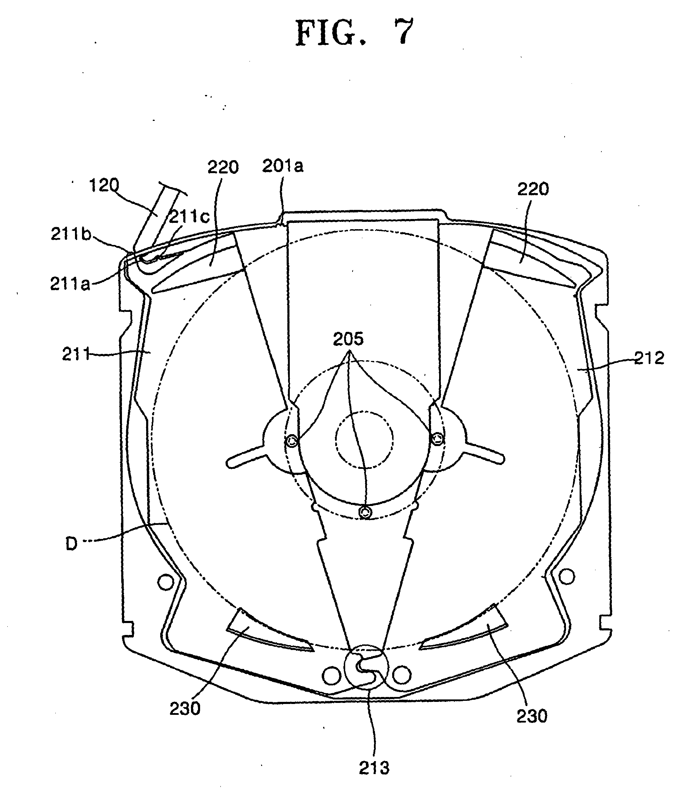

First, the shutter 210 includes first and second shutter portions 211 and 212 installed inside the case 201 to be capable of rotating symmetrically with respect to each other. Thus, when the first and second shutter portions 211 and 212 are rotated in a direction in which they are separated from each other, the opening hole 202 is opened (refer to FIG. 7). In contrast, when the first and second shutter portions 211 and 212 are rotated in a direction in which they approach each other, the opening hole 202 is shut (refer to FIG. 5). Reference numeral 213 denotes an engagement threaded portion for connecting the first and second shutter portions 211 and 212 to be engaged with each other. Accordingly, when the first shutter portion 211 is rotated, the second shutter portion 212 is rotated in a direction symmetrical to the direction of the rotation of the first shutter portion 211. A torsion spring 204 for elastically biasing the first and second shutter portions 211 and 212 in directions to shut the opening hole 202 is installed between each of the first and second shutter portions 211 and 212 and the bottom surface of the case 201. Thus, when a force applied by an opening lever 120 is removed, the shutter 210 is returned to the original shut state.

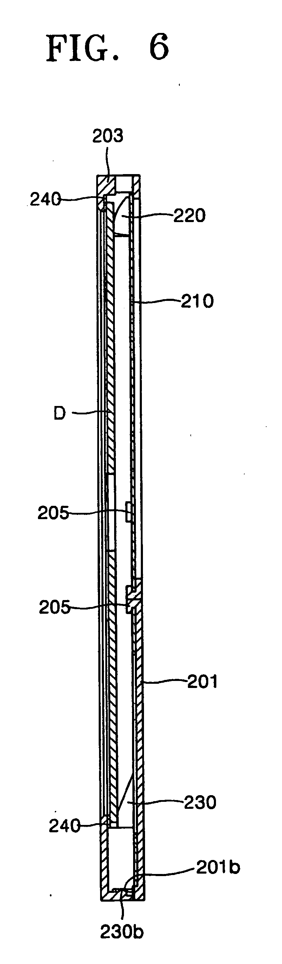

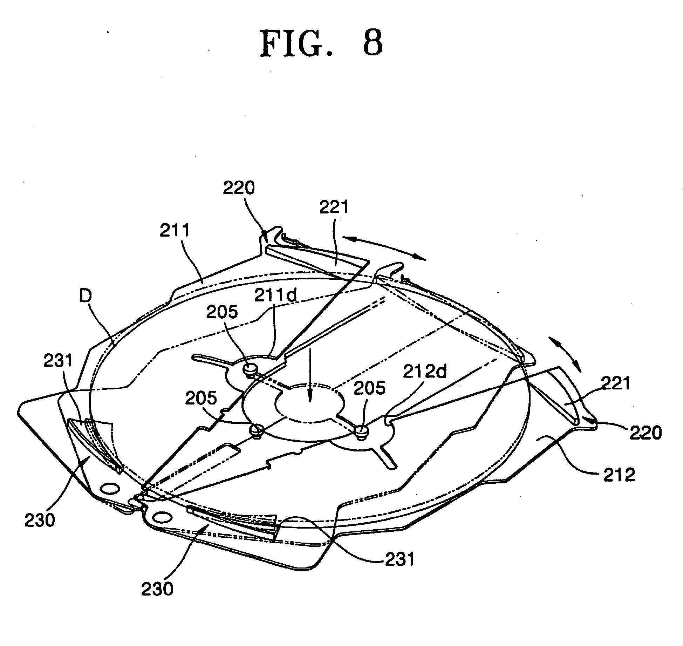

Protruding portions 220 and 230 contacting an edge portion D3 of the outer circumferential side of the disk D are formed at the first and second shutter portions 211 and 212. That is, the disk D is divided into a clamping area D1 provided at the inner circumferential side, an information area D2 where information is recorded, and the edge portion D3 provided outside the information area D2. Since the protruding portions 220 and 230 support the edge portion D3 that is one of non information areas, contact between the information area D2 and the shutter 210 can be avoided. The protruding portions 220 and 230 include inclined surfaces 221 and 231 inclined toward the center of the disk D, respectively, as shown in FIG. 8. Thus, when the shutters 211 and 212 are shut as indicated by a dotted line of FIG. 8, the edge portion D3 of the disk D is supported by the upper ends of the protruding portions 220 and 230. When the shutter 211 and 212 are opened as indicated by a solid line of FIG. 8, the disk D descends along the inclined surfaces 221 and 231. The clamping area D1 at the inner circumferential side of the disk D that is lowered is supported by a plurality of protrusions 205 formed on the case 201. In contrast, the edge portion D3 of the disk D that is raised closely contacts the non woven fabric 240 that is a sealing member, as shown in FIG. 6. Thus, a gap between the cover 203 and the edge portion D3 of the disk D is blocked so that dust can be prevented from intrusion through the gap. In stead of the above non woven fabric 240, soft materials, such as rubber, which can be elastically deformed when receiving a closely pushing force by the disk D can be adopted.

Since the open hole 203a of the cover 203 is formed to have a diameter smaller than the diameter of the disk D, the disk D is prevented form escaping through the open hole 203a. When the disk D is to be replaced, as shown in FIG. 4, the cover 203 pivots to be opened as shown in FIG. 4. Then, the disk D is taken from the case 201 and a new disk is accommodated therein. Reference numerals 203b and 201 b denote a locking protrusion and a coupling hole respectively provided at the cover 203 and the case 201 and elastically coupled to each other when the cover 203 is shut.

The disk cartridge where the disk D is installed enters the disk drive apparatus in the state in which the shutter 210 and the cover 203 are shut, as shown in FIGS. 5 and 6. When the disk cartridge enters the disk drive apparatus, as shown in FIG. 7, the opening lever 120 installed at the disk drive apparatus pushes the locking piece 211 a to unlock a protrusion 211 c and a groove 201 a and then pushes an interference piece 211 b to rotate the first shutter portion 211 counterclockwise on the drawing sheet. Then, the second shutter portion 212 is rotated clockwise by the engagement threaded portion 213. Accordingly, the opening hole 202 is opened between the first and second shutter portions 211 and 212. Here, since the disk D is contacted only by the protruding portions 220 and 230 of the first and second shutter portions 211 and 212, and the contact portion is limited only to the edge portion D3 of the disk D, there is hardly a possibility to damage the information area of the recording surface during the opening/shutting operation of the shutter 210. As the shutter 210 is opened, the disk D descends along the inclined surfaces 221 and 231 of the protruding portions 220 and 230 so as to be supported on the protrusions 205. In this state, a turntable (not shown) for driving a disk of the disk drive apparatus enters through the opening hole 202 that is opened, and a clamper (not shown) enters through the open hole 203a of the cover 203 to clamp the disk D supported on the protrusions 205. Then, as the turntable rotates, recording and reproduction is performed with respect to the disk D.

When the recording and/or reproduction is completed and the clamping by the turntable and the clamper is released, the disk D remains such that the clamping area D1 is supported on the protrusions 205. In this state, when the disk cartridge escapes from the disk drive apparatus, the first and second shutter portions 211 and 212 pivot to their original positions so that the opening hole 202 is shut. Here, the edge portion D3 of the disk D ascends along the inclined surfaces of the protruding portions 220 and 230 to be in the state shown in FIGS. 5 and 6. Here, since the shutting operation is performed without contacting between the shutter 210 and the information area D2, the information area D2 can be safely kept. Also, in this state, since the edge portion D3 of the disk D closely contacts the circumferential portion of the open hole 203a of the cover 203 via the non woven fabric 240 interposed therebetween, contaminants, such as dust, hardly intrudes through the gap.

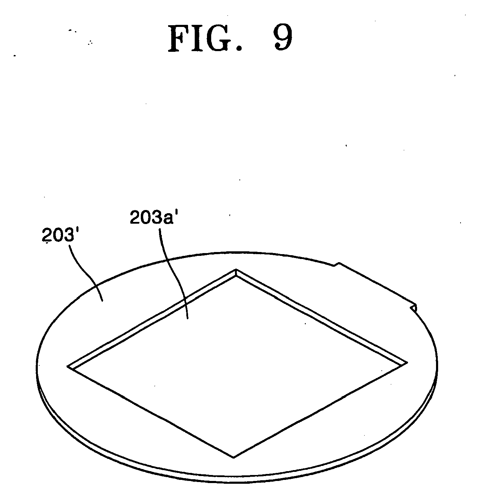

In the present preferred embodiment, since the open hole 203a is formed to have a diameter smaller then that of the disk D, the disk D can be prevented from escaping through the open hole 203a without installing the escape prevention lever 103a (refer to FIG. 1) in the conventional technology. However, any open hole having a variety of shapes capable of preventing escape of the disk D can be adopted. For example, as shown in FIG. 9, a rectangular open hole 203a' having an area smaller than that of the disk D is formed at the center of a cover 203', so that the disk D is prevented from escaping through the open hole 203a'. However, an open area through which the clamper enters should be secured for clamping of the disk.

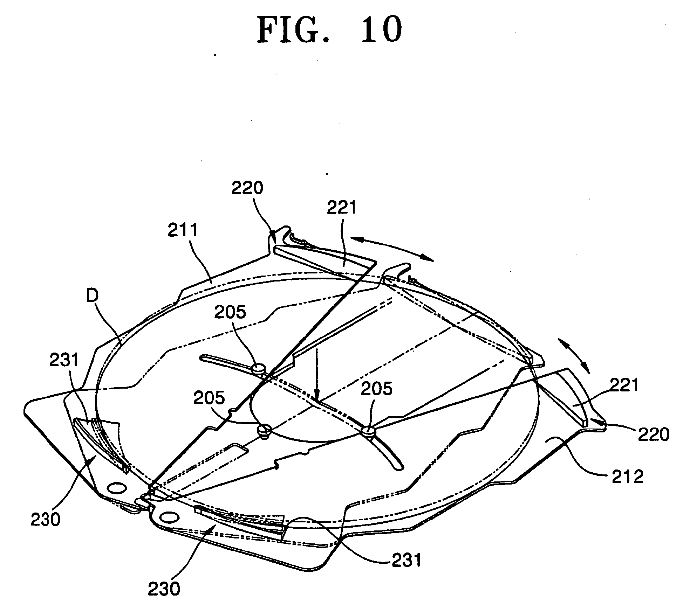

Also, in the above preferred embodiment, semicircular cut portions 211 d and 212d are formed to form a hole at the center when the first and second shutter portions 211 and 212 are shut (refer to FIG. 8). When the cover 203 is opened and the disk D is to be taken out, the hole formed at the shutter 210 facilitates taking out the disk by inserting a finger into the hole of the disk D. That is, when the hole is formed in the shutter 210, since the finger can be inserted deep into the center hole of the disk D and bent, the disk D can be conveniently taken out. However, to reduce the amount of dust adhering to the recording surface of the disk D from the lower side of the shutter 210, the structure shown in FIG. 10 is possible although it becomes inconvenient to take out the disk D. In FIG. 10, a slot is formed in the first and second shutter portions 211 and 212 corresponding to a portion interfered with the protrusion 205 during the opening/shutting operation while blocking the other portions. Thus, to prevent the smallest possibility that dust adheres to the recording surface of the disk D, the semicircular cut portion can be removed as shown in FIG. 10.

### Industrial Applicability

As described above, the disk cartridge of the present invention has the following advantages.

First, since the shutter in the case contacts only the non information area of the disk, the disk information area can be safely kept during the operation of opening/shutting the opening hole.

Second, since the edge portion of the outer circumferential side of the disk closely contacts the sealing member around the open hole of the cover in the state in which the shutter is shut, a gap through which dust can intrude is blocked so that a possibility of contaminating the recording surface can be reduced.

Third, since the cover is installed at the case to be open/shut by pivoting to facilitate replacement of the disk and the area of the open hole is formed to be smaller than that of the disk, the disc can be safely kept without installing an additional escape prevention member.

## Claims

1. A disk cartridge including a case (201) accommodating a disk (D) and having a first hole (202), a cover (203) installed at the case (201) and having a second hole (203a) open to an outside of the cover (203), and a shutter (210) movably installed on the case (201) and disposed under the disk (D) to open/shut the first hole formed in the case (201);
**characterised in that** the disk cartridge comprises:
a plurality of protruding portions (220, 230) provided at the shutter (210) to support a non information area provided at an outer circumferential side of the disk (D) and having inclined surfaces (221,231) inclined at a predetermined angle, so that, when the shutter (210) is opened, the disk (D) descends along the inclined surfaces (221,231) and, when the shutter (210) is shut, the disk (D) ascends along the inclined surfaces (221,231) to closely contact a portion around the second hole (203a) of the cover (203).

2. The disk cartridge as claimed in claim 1, wherein a sealing member (240) is installed around the second hole (203a) so that the disk closely contacts the sealing member (240).

3. The disk cartridge as claimed in claim 2, wherein the sealing member (240) is formed of a material which can be elastically deformed according to a closely contacting force of the disk (D).

4. The disk cartridge as claimed in claim 3, wherein the sealing member (240) is formed of any one of non woven fabric and rubber.

5. The disk cartridge as claimed in claim 1, wherein the cover (203) is installed at the case (201) to be capable of being open/shut with a pivoting movement.

6. The disk cartridge as claimed in claim 5, wherein the second hole (203a) is formed to have an area smaller than that of the disk (D).

7. The disk cartridge as claimed in claim 5, wherein a locking protrusion (203b) is formed at any one of the cover (203) and the case (201) and a coupling groove (201 b) to be elastically coupled to the locking protrusion (203b) is formed at the other one of the cover (203) and the case (201).

8. The disk cartridge as claimed in claim 1, wherein a protrusion (205) is provided at the case (201) in order to support a non information area at an inner circumferential side of the disk (D) where the disk (D) descends along the inclined surface (221,231).

## Patentansprüche

1. Datenträgerkassette, enthaltend ein Gehäuse (201), in dem ein Datenträger (D) aufbewahrt ist und das ein erstes Loch (202) aufweist; einen Deckel (203), der an dem Gehäuse (201) montiert ist und ein zweites Loch (203a) aufweist, das zur Außenseite des Deckels (203) hin offen ist, und einen beweglich an dem Gehäuse (201) und unter dem Datenträger (D) zur Öffnung/Schließung des in dem Gehäuse (201) ausgebildeten Lochs montierten Verschluss (210), **dadurch gekennzeichnet, dass** die Datenträgerkassette Folgendes umfasst: mehrere vorstehende Teile (220, 230), die zum Tragen eines Nichtinformationsbereichs, der an einer äußeren Umfangsseite des Datenträgers (D) vorgesehen ist, am Verschluss (210) vorgesehen sind und unter einem vorbestimmten Winkel geneigte Flächen (221, 231) aufweisen, derart, dass der Datenträger (D) beim Öffnen des Verschlusses (210) die geneigten Flächen (221, 231) entlang niedergelassen wird und der Datenträger (D) beim Verschließen des Verschlusses (210) die geneigten Flächen (221, 231) entlang heraufbewegt wird, um mit einem um das zweite Loch (203a) des Deckels (203) laufenden Teil in engen Kontakt zu treten.

2. Datenträgerkassette nach Anspruch 1, wobei ein Dichtungsglied (240) derart um das zweite Loch (203a) herum montiert ist, dass der Datenträger mit dem Dichtungsglied (240) in engem Kontakt steht.

3. Datenträgerkassette nach Anspruch 2, wobei das Dichtungsglied (240) aus einem Material gebildet ist, das mit einer in engem Kontakt stehenden Kraft des Datenträgers (D) elastisch verformt werden kann.

4. Datenträgerkassette nach Anspruch 3, wobei das Dichtungsglied (240) aus einem Vliesstoff oder Kautschuk gebildet ist.

5. Datenträgerkassette nach Anspruch 1, wobei der Deckel (203) derart an dem Gehäuse (201) montiert ist, dass man es mit einer Schwenkbewegung öffnen/verschließen kann.

6. Datenträgerkassette nach Anspruch 5, wobei das zweite Loch (203a) so ausgebildet ist, dass es eine kleinere Fläche als die des Datenträgers (D) aufweist.

7. Datenträgerkassette nach Anspruch 5, wobei ein Verriegelungsvorsprung (203b) an einem der Elemente, Deckel (203) oder Gehäuse (201), ausgebildet ist und eine mit dem Verriegelungsvorsprung (203b) elastisch zu koppelnde Kopplungsnut (201b) an dem jeweiligen anderen Element, Gehäuse (201) oder Deckel (203), ausgebildet ist.

8. Datenträgerkassette nach Anspruch 1, wobei ein Vorsprung (205) an dem Gehäuse (201) ausgebildet ist, um einen Nichtinformationsbereich an einer inneren Umfangsseite des Datenträgers (D) zu tragen, wo der Datenträger (D) die geneigten Flächen (221, 231) entlang niedergelassen wird.

## Revendications

1. Cartouche de disque comprenant un boîtier (201) recevant un disque (D) et présentant un premier orifice (202), un couvercle (203) mis en place sur le boîtier (201) et comportant un second orifice (203a) s'ouvrant à l'extérieur du couvercle (203), et un obturateur (210) installé de façon mobile sur le boîtier (201) et disposé sous le disque (D) pour ouvrir/fermer le premier orifice formé dans le boîtier (201) ;
**caractérisé en ce que** la cartouche de disque comprend : une pluralité de parties formant protubérances (220, 230) disposées au niveau de l'obturateur (210) pour supporter une zone ne contenant pas d'informations prévue dans une partie circonférentielle extérieure du disque (D) et ayant des surfaces inclinées (221, 231) selon un angle prédéterminé, afin que, lorsque l'obturateur (210) est ouvert, le disque (D) descende le long des surfaces inclinées (221, 231) et que, lorsque l'obturateur (210) est fermé, le disque (D) s'élève le long des surfaces inclinées (221, 231) pour venir en contact étroit avec une zone entourant le second orifice (203a) du couvercle (203).

2. Cartouche de disque selon la revendication 1, dans lequel un élément de fermeture hermétique (240) est mis en place autour du second orifice (203a) afin que le disque vienne en contact étroit avec l'élément de fermeture hermétique (240).

3. Cartouche de disque selon la revendication 2, dans lequel l'élément de fermeture hermétique (240) est formé d'un matériau qui peut se déformer de manière élastique en fonction d'une force de mise en contact étroit du disque (D).

4. Cartouche de disque selon la revendication 3, dans lequel l'élément de fermeture hermétique (240) est formé de l'un quelconque d'un tissu non tissé et d'un caoutchouc.

5. Cartouche de disque selon la revendication 1, dans lequel le couvercle (203) est mis en place sur le boîtier (201) de manière à pouvoir être ouvert/fermé par un mouvement de pivotement.

6. Cartouche de disque selon la revendication 5, dans lequel le second orifice (203a) est formé de façon à avoir une superficie inférieure à celle du disque (D).

7. Cartouche de disque selon la revendication 5, dans laquelle une protubérance de verrouillage (203b) est formée sur l'un quelconque du couvercle (203) et du boîtier (201) et dans laquelle une gorge d'accouplement (201b) devant être accouplée élastiquement à la protubérance de verrouillage (203b) est formée sur l'autre du couvercle (203) et du boîtier (201).

8. Cartouche de disque selon la revendication 1, dans laquelle une protubérance (205) est prévue sur le boîtier (201) afin de supporter une zone ne contenant pas d'informations dans une partie circonférentielle intérieure du disque (D) où le disque (D) descend le long de la surface inclinée (221, 231).
